# EUROPEAN PATENT SPECIFICATION

(11) **EP 2 907 733 B1**
(45) Date of publication and mention of the grant of the patent: **25.08.2021**
(21) Application number: 15154918.5
(22) Date of filing: 12.02.2015
(51) Int. Cl.: B62J 6/04, B62J 15/00

(54) **Bicycle mudguard with integrated rear light device**
Fahrradschutzblech mit Rücklichtvorrichtung
Garde-boue de bicyclette muni d'un dispositif d'éclairage arrière

(30) Priority: 12.02.2014 BE 201400093
(43) Date of publication of application: 19.08.2015
(73) Proprietor: Curana Invest bvba, 8850 Ardooie (BE)
(72) Inventor: Vens, Dirk, 8800 Roeselare (BE)
(74) Representative: Cardoen, Annelies Andréa C.

(56) References cited:
- EP-A1- 0 274 675
- WO-A1-2012/160281
- CH-A- 497 999
- CN-U- 202 827 882
- DE-A1- 19 618 070
- DE-U1-202009 004 770
- FR-A- 1 053 465
- JP-A- 2006 142 946
- TW-A- 201 404 646
- US-A- 5 384 693
- US-A1- 2005 013 138
- US-A1- 2011 141 726
- Admin: "Topeak wins IF Eurobike Award 2013 for DeFender(TM) iGlow X. | BaikBike.com", , 27 August 2013 (2013-08-27), XP055272762, Retrieved from the Internet: URL:http://www.baikbike.com/topeak-wins-if -eurobike-award-2013-for-defender-iglow-x/ [retrieved on 2016-05-13]

## Description

The present invention relates to a bicycle comprising a bicycle mudguard provided with a rear light device according to appended claim 1. The bicycle mudguard described in DE 20 2013 003 875 U1 comprises a semicylindrical tube made of semitransparent material in which an LED strip is incorporated. The tube is attached to the surface of the mudguard by the fact that the top end of the tube is held in a receiving space of a fastening head. The fastening head itself is attached to the mudguard by means of a screw. The bottom end of the tube is clamped against the surface of the mudguard by a clamp which forms part of a wing which is attached to the bottom end of the mudguard by means of screws. In addition, the tube is bonded to the surface of the mudguard or is connected thereto by means of click-action elements engaging in recesses.

Such a rear light device is mounted on top of the surface of the mudguard by means of visible screws as a separate surface-mounted device. In particular with high-quality bicycles, such a multipart surface-mounted structure is seen as unpleasant from an aesthetic point of view. It is desired to limit the number of visible components to a minimum and to incorporate the visible components in the mudguard material using a minimum of visible fastening means, resulting in an elegant assembly in which the components adjoin one another in an inconspicuous way.

Due to the fact that the housing with the light source is situated on the upper side of the mudguard, it will be necessary, if current is supplied via a conductor which is provided on the underside of the mudguard, to pass a conductor through an opening in the mudguard to the upper side of the mudguard in order to supply power to the housing. This has the drawback that an additional drill hole or passage through the mudguard is required, which renders fitting of the mudguard more difficult. In addition, such a drill hole or passage should also be prevented from an aesthetic point of view. Yet another drawback is the fact that the components which are fitted on top of the mudguard are easily damaged.

The rear mudguard described in DE 201 14 617 U1 comprises a housing with LED light sources. The housing is detachably fitted to the underside of the mudguard, so that the light sources are situated opposite a suitable opening in the mudguard. This opening is covered by means of a flat translucent cover element.

The mudguard is formed in such a way that the surface of the mudguard, which runs in the shape of an arc of a circle, is locally interrupted by a space which is situated at a lower level than the surface of the mudguard and which is delimited at the bottom by a gutter-shaped wall. The surface of the mudguard and the front end of the gutter-shaped wall situated at a lower level merge into each other via a vertical flat wall. The abovementioned opening ends in this vertical wall, so that the flat cover element via which the light is emitted is a vertical and backwardly directed surface of the mudguard. A bicycle with such a rear light device is not always sufficiently visible to other road users. Also, due to the limited dimensions of the vertical wall, the possibilities for an aesthetic design of the illumination surface are quite limited.

US 2005/013138 A1 discloses the following features of claim 1; mudguard provided with a rear light device, wherein the rear light device comprises a housing which is incorporated into the mudguard, wherein said housing comprises a top shell and a bottom shell which are assembled by their adjoining edges to form a unit which encloses an internal space, in which at least one light source is provided, wherein the housing is provided in a transverse opening in the mudguard and the top shell comprises a translucent wall, which is a convex wall that in use forms an illumination surface, and an adjoining portion, and wherein the shape and dimensions of the peripheral edge of the translucent wall correspond to the shape and the dimensions of the opening in the mudguard, so that the peripheral edge of the translucent wall closely adjoins the edges of the opening, wherein the translucent wall forms an illumination surface, in that said illumination surface substantially follows the curvature of the mudguard, and wherein the translucent wall is made from a translucent plastic, and the adjoining portion is made of the same translucent plastic or another non-translucent plastic; the opening crosses the mudguard and the housing is incorporated into the mudguard in such a way that the convex wall is situated in the opening, such that the housing is essentially situated on the inner side of the mudguard which faces the rear wheel.

It is an object of the present invention to remedy the abovementioned drawbacks of the existing mudguards comprising a rear light device.

This object is achieved by providing a bicycle comprising a bicycle mudguard with the features of appended claim 1.

To this end, the illumination surface comprises a curved surface which forms the top boundary of the illumination surface and substantially follows the curvature of the surface of the mudguard. The illumination surface is the outwardly directed surface of the translucent wall via which light originating from the light source is emitted. Preferably, the mudguard has a curvature similar to the arc of a circle.

The mudguard preferably follows an arc of a circle with a specific centre. The installation position of the mudguard is a position in which an installation angle (β) is formed of between 0° and 60° between on one side a horizontal line through said centre and on the other side a line which connects the rear end edge of the mudguard to said centre.

Preferably, this angle (β) is at least approximately 10°, more preferably at least 25°, for example at least approximately 30° or at least approximately 45°. In a particular embodiment, the installation angle (β) is, for example, at least 50°, such as for example at least 55°, 56°, 57°, 58° or 59°.

The rear end edge of the mudguard is the location where the mudguard ends, without taking into account any components which may be attached to the mudguard, such as for example a mud flap.

In many cases, the installation position of the mudguard is also determined by the position of the fastening means provided on or in the mudguard to attach the mudguard to a bicycle.

This bicycle mudguard overcomes the abovementioned drawbacks and defects of the existing bicycle mudguards. The housing which may comprise all electrical and electronic components and connections is hidden beneath the surface of the mudguard, while only a translucent wall of this housing is given the additional function of illumination surface and is visibly incorporated into the surface of the mudguard. The illumination surface follows the curvature of the mudguard, as a result of which the illumination surface, in use, appears to be a luminous partial surface of the surface of the mudguard. The surface of this translucent wall may have a suitable aesthetic form and be integrated in the surface of the mudguard. The surface of the mudguard offers sufficient space for this purpose. In addition, all fastening means may also remain hidden under the surface of the mudguard. In this way, the mudguard and the rear light device can thus be assembled to form one aesthetic unit of adjoining forms.

In addition, due to the fact that the illumination surface projects above the surface of the mudguard, light is radiated in the lateral directions and in the upward and downward direction. Such a rear light device results in a significant improvement in the visibility of the bicycle to other road users.

Due to the fact that the housing is accommodated in a transverse opening in the mudguard, the housing is accessible on the underside of the mudguard, so that a conductor which is provided on the underside of the mudguard can be taken to a contact point in the housing without having to cross the mudguard material. No passage has to be made in the surface of the mudguard which, in addition, facilitates installation. In addition, the housing may be largely situated underneath the mudguard and be protected by the mudguard. The electrical and electronic components and connections of the rear light device may be accommodated in the part of the housing which is situated under the mudguard.

The illumination surface projects above a tangent plane (R) to the surface of the mudguard which makes an angle (α) of between 40° and 60° with respect to a vertical plane. As a result thereof, even a cyclist of relatively small height will be able to see the projecting portion of the illumination surface by quickly turning his/her head around while cycling and looking backwards. In this way, the cyclist can easily determine whether the rear light is switched on and works in a satisfactory manner.

Preferably, viewed in the installation position of the mudguard, the illumination surface projects above a tangent plane (R) to the surface of the mudguard which makes an angle (α) of at least 40° with respect to a vertical plane. The abovementioned angle (α) is, for example, 40°, 45°, 50°, 55° or 60°.

Furthermore preferably, the height by which the illumination surface projects from the surface of the mudguard is not more than 10 mm. The main reason for this is in order not to disturb the aesthetic design and line of the mudguard. In a particular embodiment, the illumination surface has a maximum projecting height of between 1 and 5 mm.

In a preferred embodiment, the projecting illumination surface, viewed in the installation position of the mudguard, comprises on both sides a zone which runs in the direction of the border towards the surface of the mudguard, so that light can be radiated in both lateral directions via these zones.

In this way, a beam of light with a very wide horizontal beam angle can be emitted, as a result of which the cyclist is much more visible to other road users, not only from the rear, but also from the side. Obviously, this results in a significant improvement in the safety of the cyclist.

Preferably, the projecting illumination surface, viewed in the installation position of the mudguard, is configured to emit a beam of light with a horizontal beam angle of at least 180°. Preferably, this beam angle is at least 200°. In a most preferred embodiment of such a mudguard, this beam angle is at least approximately 220°.

In another preferred embodiment, the illumination surface, on the side which is directed to the top end of the mudguard and viewed in the installation position of the mudguard, comprises a zone where the illumination surface runs in the direction from its top edge to the surface of the mudguard.

Via the zone where the illumination surface runs in the direction from the top edge to the surface of the mudguard, the light can be emitted in a virtually vertical direction. Optionally, the light may even be emitted towards the cyclist. This makes it possible for a cyclist to ascertain whether the rear light is switched on and functions satisfactorily while he is cycling.

Preferably, the abovementioned zone of the illumination surface is at a location on the mudguard where a tangent line on the circular arch which is formed by the surface of the mudguard makes an angle of at least 20° with a vertical plane through this zone, when viewing the mudguard in the installation position. In a more preferred embodiment, this angle is at least 30°. This angle preferably is between 40° and 60°, with said angle being, for example, approximately 45°.

In the abovementioned zone, the illumination surface may be a flat surface which runs obliquely in the direction from the top edge to the surface of the mudguard, or a curved surface or have any other regular or irregular shape. The abovementioned zone is preferably, but not necessarily, the edge portion of the illumination surface. Other partial surfaces of the illumination surface or components of the rear light device may be provided between the abovementioned zone and the top edge of the illumination surface, assuming that these partial surfaces or components let a sufficient amount of the light emitted via the zone through.

In a highly preferred embodiment of this mudguard, viewed in the installation position of the mudguard, the abovementioned zone is configured to emit light in an upward direction which, in the vertical plane of symmetry according to the longitudinal direction of the mudguard, runs from the abovementioned zone obliquely upwards and approaches the vertical transverse plane which runs through the top end of the mudguard. If such a mudguard is fitted to a bicycle as a rear mudguard, the light will be emitted obliquely upwards in the direction of the cyclist and thus be particularly clearly visible when the cyclist turns around during cycling.

This upward beam of light may in this case be emitted in a direction in which the main axis of the beam of light makes an angle of at least 20°, preferably at least 30°, with respect to a vertical plane. Preferably, the beam of light is substantially emitted within a range between 0° and 45°. A particularly preferred embodiment is achieved if the upwardly emitted light has a luminosity of at least 0.025 candela (cd). This ensures optimum visibility under all circumstances.

In a very advantageous embodiment, the lighting device is incorporated into the mudguard in such a way that, viewed in the installation position of the mudguard, the illumination surface projects above a tangent plane (R) to the surface of the mudguard which makes an angle (α) of at least 20° and at most 60° with respect to a vertical plane, and is preferably at least 40°.

In an embodiment which is preferred from an aesthetic point of view, the illumination surface is configured as a convex curved surface. The shape of the projecting illumination surface then merges smoothly into the surface of the mudguard, so that an aesthetic unit is produced. In this case, the translucent wall is preferably configured as a dome-shaped wall which, centrally, is situated at a maximum distance from the surface of the mudguard and, in the direction of the peripheral edges, runs as an evenly curved surface to the surface of the mudguard.

In an embodiment which ensures very high visibility of the cyclist, the illumination surface is configured to emit, in the installation position of the mudguard, a beam of light having a luminosity distribution with respect to a vertical reference plane and a horizontal reference plane with a mutual intersecting line which coincides with the main axis of the beam of light, according to which the luminosity of the light which is emitted in the directions which form a horizontal angle of 20° with respect to the vertical reference plane and form a vertical angle of 5° with respect to the horizontal reference plane, is at least 10 % of the luminosity of the light which is emitted along the main axis.

The main axis of the beam of light is the axis along which the light is emitted at a maximum luminosity. The luminosity in other directions is expressed as a percentage of this maximum luminosity. The abovementioned horizontal angle may be seen from both the left-hand side and the right-hand side of the vertical reference plane, while the abovementioned vertical angle may be seen from both above and below the horizontal reference plane.

This means that the luminosity distribution specified above specifies a minimum luminosity of 10 % of the maximum luminosity along the main axis for the following four different directions with respect to the abovementioned reference planes:
▪ a first direction according to a horizontal angle of 20° to the left of the vertical reference plane and a vertical angle of 5° above the horizontal reference plane;
▪ a second direction according to a horizontal angle of 20° to the left of the vertical reference plane and a vertical angle of 5° below the horizontal reference plane;
▪ a third direction according to a horizontal angle of 20° to the right of the vertical reference plane and a vertical angle of 5° above the horizontal reference plane; and
▪ a fourth direction according to a horizontal angle of 20° to the right of the vertical reference plane and a vertical angle of 5° below the horizontal reference plane.

In an embodiment which also ensures an excellent visibility of the cyclist, the illumination surface is configured to emit, in the installation position of the mudguard, a beam of light having a luminosity distribution with respect to the abovementioned reference planes according to which the luminosity of the light which is emitted in the directions which form a horizontal angle of 5° with respect to the vertical reference plane and form a vertical angle of 10° with respect to the horizontal reference plane, is at least 20 % of the luminosity of the light which is emitted along the main axis.

This luminosity distribution thus specifies that the luminosity in the following four directions is not less than 20 % of the maximum luminosity according to the main axis of the beam of light:
▪ 5° to the left of the vertical reference plane and 10° above the horizontal reference plane;
▪ 5° to the left of the vertical reference plane and 10° below the horizontal reference plane;
▪ 5° to the right of the vertical reference plane and 10° above the horizontal reference plane; and
▪ 5° to the right of the vertical reference plane and 10° below the horizontal reference plane.

The above luminosity distribution may be applied without having satisfied the above-described luminosity distribution (four directions each having a minimum luminosity of 10 %). However, in a preferred embodiment, both luminosity distributions are applied together.

Preferably, the luminosity satisfies one or more of the following conditions:
▪ in the directions within a range of 5° to the left and right of the vertical reference plane and 5° above and below the horizontal reference plane, the luminosity is at least 1 cd.
▪ in the directions within a range of 110° to the left and right of the vertical reference plane and 5° above and below the vertical reference plane, the luminosity is at least 0.033 cd.

In a very advantageous embodiment of the mudguard according to the present invention, the housing is connected to the mudguard by means of elastically deformable detaining means, preferably by means of one or more click-fit connections. As a result thereof, the housing can readily be connected to the mudguard and without the use of tools. No separate connecting means are required. The detaining means can easily be hidden underneath the surface of the mudguard.

The translucent wall of the housing is best made from a mat material, preferably made of plastic. Due to the matness of the material, a very homogenous light is produced. Preferably, a translucent wall made of plastic which is red in colour is provided.

The light source comprises at least one LED. If a plurality of LEDs is provided, these may be provided on a so-called LED strip, with several LEDs being provided on the same carrier. The LEDs may then be arranged in such a manner and/or the common carrier of the LED strip may be configured in such a manner that the LEDs are in an oblique position with respect to the illumination surface.

In a very particular embodiment, the orientation of the or of each light source is adjustable. It is also possible to provide a lens to change the direction of the light. This lens may be a fixed lens or a lens whose position is adjustable in order to influence the direction of the emitted light. It is also possible to provide means in the housing to modify the direction of the light emitted by the light source and/or to diffuse the light. This may be achieved, for example, by providing the inner surface of the translucent wall with a certain relief or a surface structure or a layer which causes diffusion of light. It is also possible, for example, to provide a so-called light-diffusion tube or 'light guide'.

In a very preferred embodiment, the mudguard has a sandwich structure, in which two electrically conductive layers are separated from each other by an electrically insulating intermediate layer, in which the housing is connected to the mudguard by means of an electrically conductive connecting means which crosses the mudguard, and in which the connecting means forms an electrical connection between an electrically conductive layer of the mudguard and a contact point for power supply to one or more electrical or electronic components of the rear light device. With such a mudguard, no filament-type conductors have to be provided, which greatly facilitates the installation. In addition, a mudguard comprising a sandwich structure has increased stiffness.

Preferably, the connecting means is configured to provide a first electrical connection between the one electrically conductive layer of the mudguard and a first contact point for power supply to one or more electrical or electronic components of the rear light device, and the connecting means is also configured to provide a second electrical connection between the other electrically conductive layer of the mudguard and a second contact point for power supply to one or more electrical or electronic components of the rear light device. If required, insulating and/or electrically conductive accessories are provided to produce both circuits and keep them separated from each other.

The present invention also relates to a bicycle comprising a bicycle mudguard having one or more of abovementioned particular features. The rear light device may also comprise means to switch on at least one light source when the bicycle's brakes are being used.

In the following description, a possible embodiment of a bicycle mudguard according to the present invention is described in more detail. This description serves only to further explain the features of the invention and can therefore by no means be seen as a limitation of the scope of protection of the present invention defined in the claims of this patent application or of the area of application.

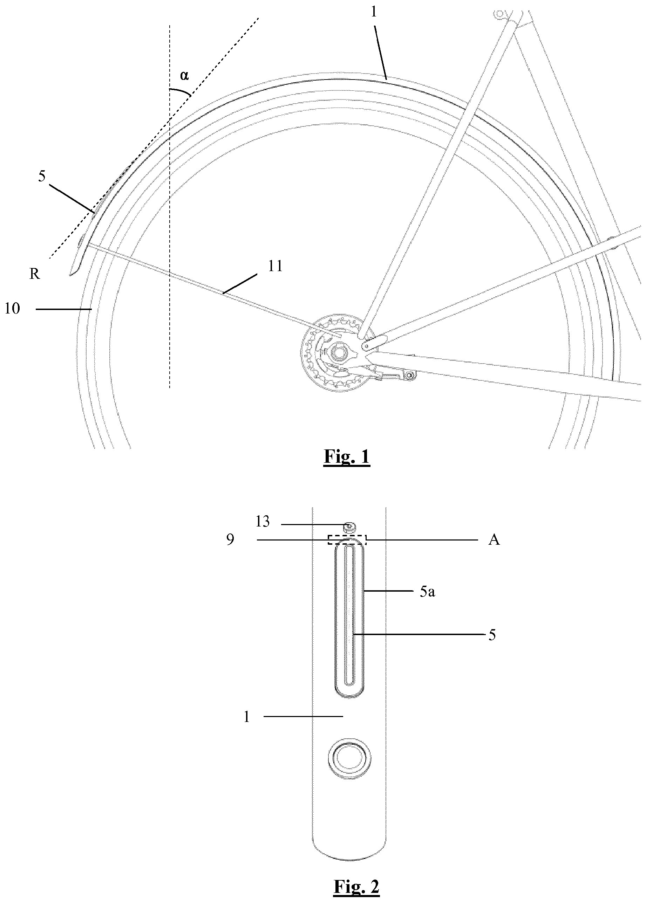

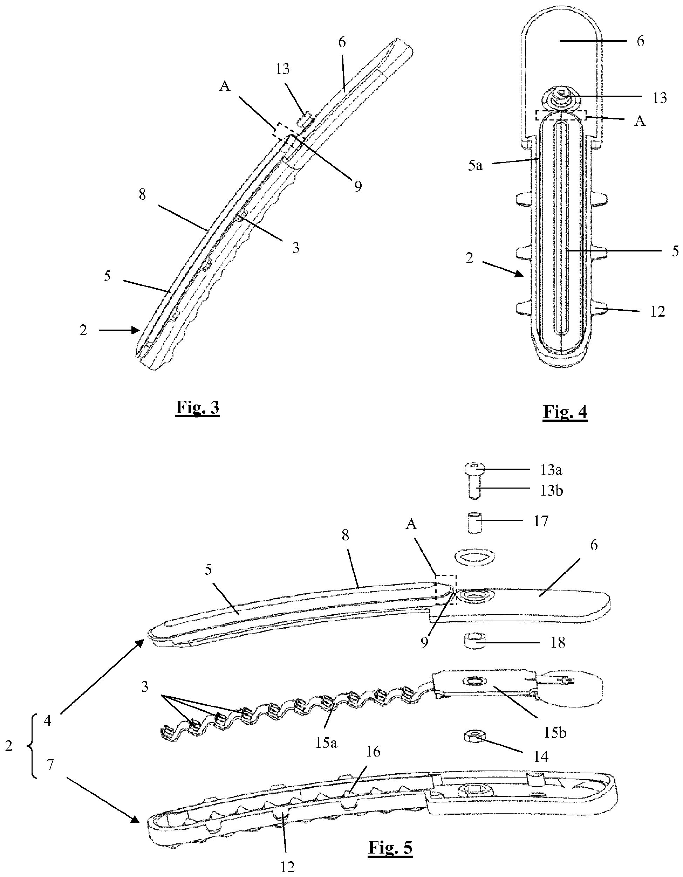

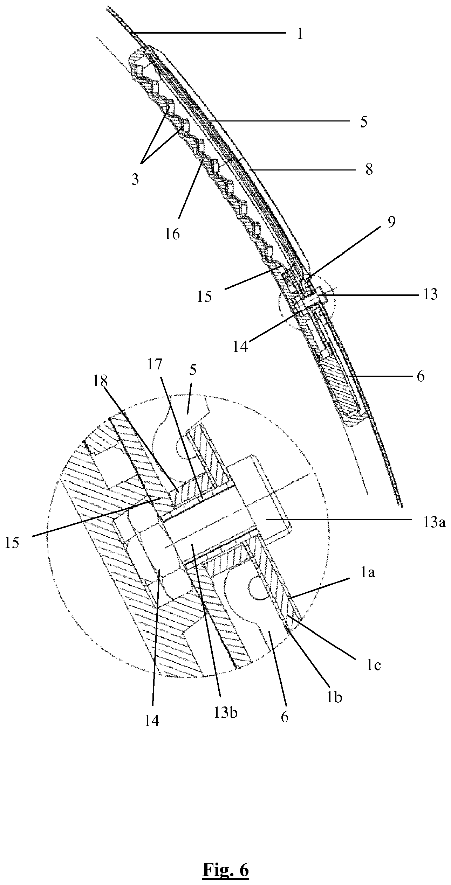

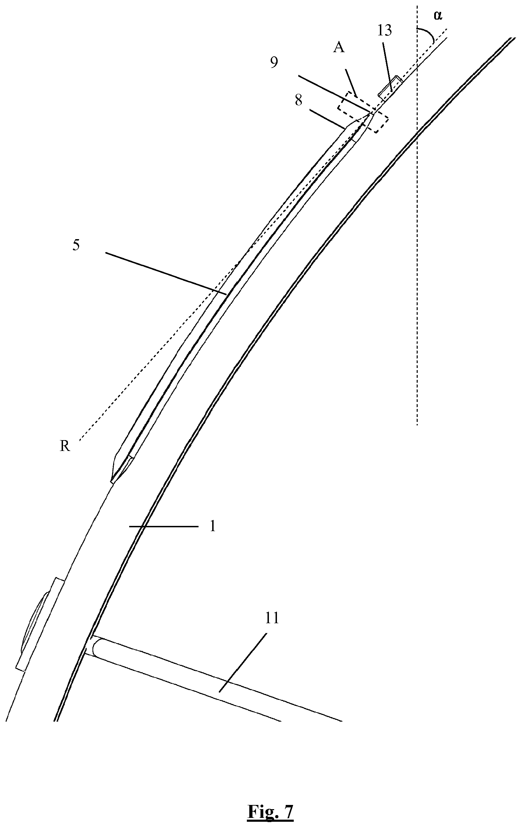

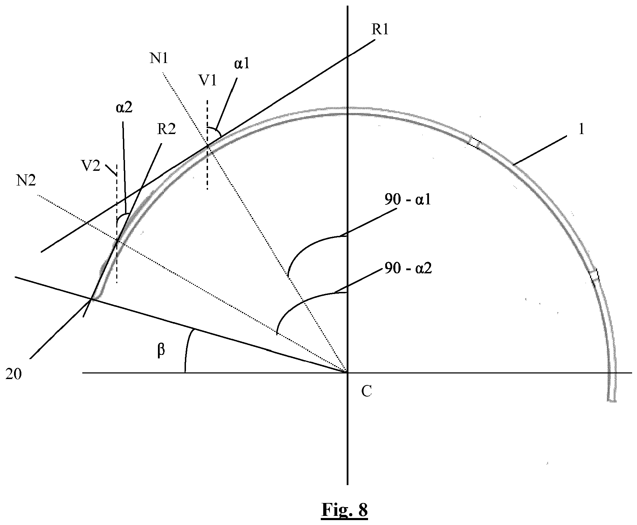

In this description, reference numerals are used to refer to the attached figures, in which
▪ Fig. 1 shows a side view of a bicycle mudguard fitted to a bicycle and provided with a rear light device according to the invention;
▪ Figs 2 and 7 show a rear view and a side view, respectively, of the bicycle mudguard with the rear light device which is fitted to the bicycle from Fig. 1;
▪ Fig. 3 shows a side view of the rear light device which is incorporated in the mudguard from Fig. 2;
▪ Fig. 4 shows a top view of the rear light device from Fig. 3;
▪ Fig. 5 shows an exploded view of the rear light device which is illustrated in Fig. 4;
▪ Fig. 6 shows a cross section along the longitudinal axis of another embodiment of a bicycle mudguard according to the invention, in which the circled portion next to the figure shows an enlarged part; and
▪ Fig. 8 shows a diagrammatic view of a mudguard according to the invention which has been placed in the installation position together with an indication of the tangent lines and angles which are relevant with respect to the positioning and design of the integrated rear light device according to the present invention.

Fig. 1 shows a portion of the rear wheel (10) of a bicycle. A mudguard (1) with a curvature according to a circular arch is attached in a conventional manner at a small intermediate distance opposite the wheel circumference. To this end, the mudguard (1) is connected to a mounting point near the hub of the rear wheel (10), inter alia by means of a connecting bar (11).

The bicycle mudguard (1) illustrated in the figures comprises a rear light device with a watertight housing (2) which is incorporated in the mudguard (1) and which comprises several LED light sources (3). The housing (2) also contains the necessary electrical and/or electronic components (not shown in the figures) to control the LED light sources (3). Furthermore, the bicycle also comprises a power source, such as for example a hub dynamo or a battery, as well as conduction means for the power supply to the abovementioned components and light sources in the housing (2).

The housing (2) consists of a top shell (4) and a bottom shell (7) which are assembled by their adjoining edges to form a unit which encloses an internal space in a watertight manner. The bottom shell (7) consists of a non-translucent plastic. The top shell (4) consists of a convex wall (5) made from a translucent red plastic and an adjoining portion (6) which consists of the same translucent plastic. However, the adjoining portion (6) may also consist of non-translucent plastic.

The mudguard (1) comprises an opening which crosses the mudguard (1). The housing (2) is incorporated into the mudguard (1) in such a way that the abovementioned convex wall (5) of translucent material is situated in the opening and projects above the surface of the mudguard on the outer side of the mudguard (1). In other words, the housing (2) is essentially situated on the inner side of the mudguard (1) which faces the wheel (10), while the convex translucent wall (5) projects from the surface of the mudguard on the outer side of the mudguard (1). The shape and the dimensions of the peripheral edge (5a) of the translucent wall (5) correspond to the shape and the dimensions of the opening in the mudguard (1), so that the peripheral edge (5a) of the translucent wall (5) closely adjoins the edges of the opening.

In order to install the housing (2) in the opening, the peripheral edge (5a) of the convex wall (5) thereof is provided with an elastically deformable edge or a pair of elastically deformable lips which project laterally and which can be taken beyond the edge of the opening in the mudguard (1) by deformation in order to detain the housing (2) in this opening.

The installation can be carried out very easily and quickly by inserting the convex wall (5) of the housing (2) from the inner side of the mudguard (1) into the opening until the abovementioned deformable edge or lips pass beyond the edge of the opening after deformation and then assume their non-deformed position again, as a result of which the housing (2) click-fits into the opening.

The housing (2) is detained in the opening due to the deformable edge or lips preventing the housing from being displaced in the direction of the inner side of the mudguard. The housing cannot be dispraced further in the direction of the outer side of the mudguard (1) either, since the transverse dimensions of the housing (2), with the exception of the convex wall (5), are greater than those of the opening. For this purpose, lateral projecting ribs (12) are provided on the shell-shaped bottom part (7).

The connection between the mudguard (1) and the housing (2) may additionally be secured by means of a bolt (13) and a nut (14). In certain aesthetic embodiments, such a connection is not desired and will thus not be provided or will be provided in another, non-visible location. In the embodiment illustrated in the figures, this bolt (13) and nut (14) also ensure the power supply to the housing (2), as will be explained further.

When the light sources (3) are switched on, the light is emitted via the convex translucent wall (5). The projecting convex upper surface of the translucent wall (5) in this case forms a luminous surface (8) which is referred to by the term 'illumination surface'. The electrical and/or electronic components and the LED light sources (3) are accommodated in that portion of the housing (2) which is situated on the underside of the mudguard (1). Due to the fact that the housing (2) is largely situated on the underside of the mudguard (1), it is protected against damage by the mudguard (1).

The illumination surface (8) is a convex curved surface which, in the directions of its peripheral edges (5a), runs towards the surface of the mudguard. Thus, viewed in the installation position of the mudguard (1), the convex illumination surface (8) thus has a zone (A), on the side which faces the top end of the mudguard (1), where the illumination surface (8) runs towards the surface of the mudguard in the direction of its top edge (9). Via the illumination surface (8) in this zone (A) which runs towards the surface of the mudguard, light is emitted in an upward direction which, viewed in the vertical plane of symmetry which extends along the longitudinal direction of the mudguard (1), runs obliquely upwards from the abovementioned zone (A) and in this case approaches the vertical transverse plane which runs through the top end of the mudguard (1). In other words, this light is emitted obliquely upwards from zone (A) in the direction of the cyclist.

When looking at a tangent plane (R) to the surface of the mudguard which makes an angle (α) of approximately 40° with respect to a vertical plane (see Figs 1 and 7), then the illumination surface (8) projects above this tangent plane. On a bicycle provided with such a rear mudguard, a cyclist who is of relatively small stature can see the illumination surface by turning around during cycling. Thus, the cyclist can easily check if the rear light is switched on and works properly.

The convex illumination surface (8) thus forms respective zones where the illumination surface (8) runs in the direction of the border towards the surface of the mudguard on the sides which face the respective borders of the mudguard (1) as well. Via the illumination surface (8) which runs towards the surface of the mudguard in these zones, the light is thus also emitted in the respective lateral directions, to the left and to the right of the bicycle, as a result of which a beam of light with a very wide horizontal beam angle of approximately 220° is formed.

In addition, light will also be emitted in a direction which is directed downwards, away from the cyclist. Thus, sufficient light is emitted in all directions, so that a cyclist on a bicycle according to the invention is highly visible to other road users and, in addition, can check with certainty whether his rear light is switched on and works properly, even during cycling.

In this case, a luminosity distribution is achieved which satisfies the following minimum requirements for luminosity, with respect to the abovementioned reference planes and with respect to the maximum luminosity (100 %) according to the main axis of the beam of light.

| | | To the left of the To the right of the vertical reference plane vertical reference plane | | | | | | |
|---|---|---|---|---|---|---|---|---|
| | | **20°** | **10°** | **5°** | **0°** | **5°** | **10°** | **20°** |
| Above the horizontal reference plane | **10°** | | | 20% | | 20% | | |
| | **5°** | 10% | 20% | | 70% | | 20% | 10% |
| | **0°** | | 35 % | 90% | 100% | 90% | 35 % | |
| Below the horizontal reference plane | **5°** | 10% | 20% | | 70% | | 20% | 10% |
| | **10°** | | | 20% | | 20% | | |

The LED light sources (3) not only comprise the luminous semiconductor, but also, inter alia, a reflector, contact points and a lens. The housing comprises several of these LED light sources (3) which are fitted in a row on a common carrier (15) of circuit board material (see Figs 5 and 6). This carrier (15) consists of an elongate strip (15a) where the circuit board material is flexible and a wider portion (15b) which adjoins the former and where the circuit board material is less flexible or not flexible at all. The strip (15a) of flexible material is situated on the bottom surface of the bottom shell (7), where this bottom surface is provided with a relief which is formed by a row of successive teeth (16) which are separated by intermediate spaces and in which each tooth (16) has a steep flank on one side and an inclined flank which is less steep on the other side. The strip (15a) has an undulating shape which follows the relief formed by the teeth. The flexible circuit board material in this case forms a series of successive tops with, in each case, a V-shaped inclined trough between two tops, with the flank on one side in each case being less steep than the one on the other side. In each trough, a respective LED light source (3) is fitted to the strip (15a). The LED light sources (3) are in this case fitted to the least steep flank in each case, so that all LEDs have the same oblique orientation. The slope of the abovementioned least steep flanks is in this case such that these flanks end up in a virtually vertical position when the mudguard (1) is fitted to the bicycle. The LEDs arranged on these flanks are consequently directed to the rear with respect to the bicycle.

In an alternative embodiment (not illustrated in the drawings), the bottom shell (7) has a bottom surface without the abovementioned teeth (16). The strip (15a) is then attached to the bottom surface and is in this case curved to form a surface having virtually the same curvature as the mudguard. The LEDs consequently emit light in a direction which is at right angles to the surface of the mudguard. By means of the lenses arranged opposite the LEDs, the direction of the emitted light can be influenced. Preferably, the light is then emitted substantially in a virtually horizontal direction towards the rear.

In another possible embodiment (which is not illustrated in the drawings either), light is emitted in two or more different direction as a result of the arrangement of the LEDs and/or by influencing the direction of the emitted light. Thus, the light of certain LEDs may be emitted mainly towards the rear, while the light of other LEDs is mainly emitted in a lateral direction or in an upward direction.

In order to produce uniform light, the translucent wall (5) is made from mat plastic.

The mudguard (1) has a sandwich structure, in which two electrically conductive layers (1a), (1b) are separated from each other by an electrically insulating intermediate layer (1c). The screw connection between the mudguard (1) and the housing (2) of the rear light device is achieved by means of an electrically conductive bolt (13) and a nut (14), and in which an insulating sleeve (17) and an electrically conductive bush (18) are fitted to the bolt shank (13b), so that this connection not only ensures a mechanical attachment, but also produces the electrical contact with the power source. This is achieved as follows with reference to Fig. 6.

With its positive and negative pole, the power source electrically contacts the one (1a) and the other conductive layer (1b) of the mudguard (1), respectively. As a result thereof, the conductive layers (1a), (1b) of the mudguard (1) can provide the power supply to the housing (2).

An insulating sleeve (17) is provided around the shank (13a) of the screw (13) and a bush (18) made of electrically conductive material is provided around this sleeve (17). On the one hand, the LED light sources (3) are in electrical contact with the top side of the circuit board (15). The conductive bush (18) is in electrical contact with the top side of the circuit board (15) and with the bottom conductive layer (1b) of the mudguard (1), so that the one pole of the power source, for example the positive pole, establishes an electrical connection with the top side of the circuit board (15) via the bottom conductive layer (1b) of the mudguard (1) and the conductive bush (18).

On the other hand, the LED light sources (3) are also in electrical contact with the bottom side of the circuit board (15). The nut (14) which is screwed onto the bolt shank (13a) comes into electrical contact with the underside of the circuit board (15), while the bolt head (13b) is in contact with the top conductive layer (1a) of the mudguard (1). The other pole of the power source, for example the negative pole, thus establishes an electrical connection with the bottom side of the circuit board (15) via the top conductive layer (1a) of the mudguard (1), the bolt head (13a), the bolt shank (13b) and the nut (14).

The sleeve (17) made of insulating material is provided to prevent the bolt shank (13a) from electrically contacting the bottom electrically conductive layer (1b) or the top side of the circuit board (15). By means of the bolt (13) and the nut (14), an electrical circuit is thus formed here of which the light sources (3) form part.

As a result thereof, power can be supplied without using thread-like electrical conductors. The electrical connections and the mechanical attachment of the housing (2) to the mudguard (1) can thus be achieved easily and quickly during installation of the mudguard (1) by an identical operation and using the same components, i.e. the bolt (13), the nut (14), the insulating sleeve (17) and the conductive bush (18).

Fig. 8 diagrammatically shows a mudguard with a shape which follows a substantially circular arch and has a centre (C). The rear side of the mudguard is situated on the left-hand side in the figure.

The mudguard (1) is in an installation position, in which the installation angle (β) between, on the one hand, a horizontal line through the centre (C) and, on the other hand, a line which connects the rear end edge (20) of the mudguard (1) to the centre (C) is relatively small, in the order of magnitude of 10°, but this angle may also be greater, such as approximately 25° or more, or for example may be at least approximately 30° or approximately 45°. In a particular embodiment, this is for example at least 50°, such as for example at least 55°, 56°, 57°, 58° of 59°.

Two tangent planes (R1), (R2) to the surface of the mudguard are proposed, as well as the angles (α1), (α2) between these tangent planes and a respective vertical plane (V1), (V2) through the points of contact.

The angle (α1) of the first tangent plane (R1) is approximately 60° and the angle (α2) of the second tangent plane (R2) is approximately 20°. In a more preferred embodiment, the angle (α2) of the second tangent plane (R2) is preferably approximately 40°.

A respective normal line (N1), (N2) runs through the centre (C) and through each of the two points of contact where the tangent planes (R1), (R2) touch the mudguard, and forms a respective angle (90-α1), (90-α2) with a vertical line through the centre (C).

According to the present invention, the illumination surface (8) of the translucent wall (5) projects above a tangent plane (R1), (R2) which forms an angle (α) of between 20° and 60° with respect to a vertical surface (V1), (V2).

## Claims

1. Bicycle comprising a bicycle mudguard (1) provided with a rear light device, wherein the rear light device comprises a housing (2) which is incorporated into the mudguard, wherein said housing (2) comprises a top shell (4) and a bottom shell (7) which are assembled by their adjoining edges to form a unit which encloses an internal space in which at least one light source (3) is provided, wherein the housing (2) is provided in a transverse opening in the mudguard (1) and the top shell (4) comprises a translucent wall (5), which is a convex wall (5) that in use forms an illumination surface (8), and an adjoining portion (6), and wherein the shape and dimensions of the peripheral edge (5a) of the translucent wall (5) correspond to the shape and the dimensions of the opening in the mudguard (1), so that the peripheral edge (5a) of the translucent wall (5) closely adjoins the edges of the opening, wherein the translucent wall (5) forms an illumination surface (8) projecting from the surface of the mudguard, in that said illumination surface (8) substantially follows the curvature of the mudguard (1), and in that, viewed in the installation position of the mudguard, the illumination surface projects above a tangent plane (R) to the surface of the mudguard which makes an angle (α) with respect to a vertical plane which is at least 20° and at most 60°, and wherein
• the translucent wall (5) is made from a translucent plastic, and the adjoining portion (6) is made of the same translucent plastic or another non-translucent plastic;
• the opening crosses the mudguard (1) and the housing (2) is incorporated into the mudguard (1) in such a way that the convex wall (5) is situated in the opening and projects above the surface of the mudguard on the outer side of the mudguard (1), such that the housing is essentially situated on the inner side of the mudguard (1) which faces the rear wheel (10) of the bicycle, while the convex wall (5) projects from the surface of the mudguard (1) on the outer side of the mudguard (1).

2. Bicycle according to Claim 1, **characterized in that**, viewed in the installation position of the mudguard, the illumination surface projects above a tangent plane (R) to the surface of the mudguard which makes an angle (α) with respect to a vertical plane which is at least 40°.

3. Bicycle according to Claim 1 or 2, **characterized in that** the height by which the illumination surface projects from the surface of the mudguard is not more than 10 mm.

4. Bicycle according to one of the preceding claims, **characterized in that** the projecting illumination surface (8), viewed in the installation position of the mudguard (1), comprises on both sides a zone which runs in the direction of the border towards the surface of the mudguard, so that light can be radiated in both lateral directions via these zones.

5. Bicycle according to any of the preceding claims, **characterized in that** the projecting illumination surface (8), viewed in the installation position of the mudguard (1), is configured to emit a beam of light with a horizontal beam angle of at least 180°.

6. Bicycle according to any of the preceding claims, **characterized in that** the illumination surface, on the side which is directed to the top end of the mudguard (1) and viewed in the installation position of the mudguard (1), comprises a zone (A) where the illumination surface (8) runs in the direction from its top edge (9) to the surface of the mudguard.

7. Bicycle according to Claim 6, **characterized in that**, viewed in the installation position of the mudguard (1), said zone (A) is configured to emit light in an upward direction which, in the vertical plane of symmetry according to the longitudinal direction of the mudguard (1), runs from said zone (A) obliquely upwards and approaches the vertical transverse plane which runs through the top end of the mudguard (1).

8. Bicycle according to Claim 6 or 7, **characterized in that** the upwardly emitted light has a luminosity of at least 0.025 cd.

9. Bicycle according to any of the preceding claims, **characterized in that** the illumination surface (8) is configured to emit, in the installation position of the mudguard (1), a beam of light having a luminosity distribution with respect to a vertical reference plane and a horizontal reference plane with a mutual intersecting line which coincides with the main axis of the beam of light, according to which the luminosity of the light which is emitted in the directions which form a horizontal angle of 20° with respect to the vertical reference plane and form a vertical angle of 5° with respect to the horizontal reference plane, is at least 10 % of the luminosity of the light which is emitted along the main axis.

10. Bicycle according to any of the preceding claims, **characterized in that** the illumination surface (8) is configured to emit, in the installation position of the mudguard (1), a beam of light having a luminosity distribution with respect to a vertical reference plane and a horizontal reference plane with a mutual intersecting line which coincides with the main axis of the beam of light, according to which the luminosity of the light which is emitted in the directions which form a horizontal angle of 5° with respect to the vertical reference plane and form a vertical angle of 10° with respect to the horizontal reference plane, is at least 20 % of the luminosity of the light which is emitted along the main axis.

11. Bicycle according to any of the preceding claims, **characterized in that** the light source (3) comprises at least one LED.

12. Bicycle according to any of the preceding claims, **characterized in that** the orientation of the light source (3) is adjustable.

13. Bicycle according to any of the preceding claims, **characterized in that** the housing (2) comprises means to modify the direction of the light emitted by the light source (3) and/or to diffuse the light.

14. Bicycle according to any of the preceding claims, **characterized in that** the mudguard (1) has a sandwich structure, wherein two electrically conductive layers (1a), (1b) are separated from each other by an electrically insulating intermediate layer (1c), in which the housing (2) is connected to the mudguard (1) by means of an electrically conductive connecting means (13), (14) which crosses the mudguard (1), and **in that** the connecting means (13), (14) in this case forms an electrical connection between an electrically conductive layer (1a), (1b) of the mudguard (1) and a contact point for power supply to one or more electrical or electronic components of the rear light device.

## Patentansprüche

1. Fahrrad, umfassend ein Fahrradschutzblech (1), bereitgestellt mit einer Rücklichtvorrichtung, wobei die Rücklichtvorrichtung ein Gehäuse (2) umfasst, das in das Schutzblech integriert ist, wobei das Gehäuse (2) eine obere Schale (4) und eine untere Schale (7) umfasst, die über ihre angrenzenden Kanten zusammengebaut werden, um eine Einheit zu bilden, die einen inneren Raum umschließt, in dem zumindest eine Lichtquelle (3) bereitgestellt ist, wobei das Gehäuse (2) in einer quer verlaufenden Öffnung im Schutzblech (1) bereitgestellt ist und die obere Schale (4) eine durchscheinende Wand (5), die eine konvexe Wand (5) ist, die bei Verwendung eine Beleuchtungsoberfläche (8) bildet, und einen angrenzenden Teil (6) umfasst, und wobei die Form und die Abmessungen der peripheren Kante (5a) der durchscheinenden Wand (5) der Form und den Abmessungen der Öffnung im Schutzblech (1) entsprechen, sodass die periphere Kante (5a) der durchscheinenden Wand (5) eng an die Kanten der Öffnung angrenzt, wobei die durchscheinende Wand (5) eine Beleuchtungsoberfläche (8) bildet, die aus der Oberfläche des Schutzblechs herausragt, dass die Beleuchtungsoberfläche (8) im Wesentlichen der Krümmung des Schutzblechs (1) folgt und dass, in der Einbauposition des Schutzblechs gesehen, die Beleuchtungsoberfläche über eine Tangentialebene (R) an der Oberfläche des Schutzblechs herausragt, die einen Winkel (α) bezüglich einer vertikalen Ebene bildet, der mindestens 20° und höchstens 60° ist und wobei
• die durchscheinende Wand (5) aus einem durchscheinenden Kunststoff gefertigt ist und der angrenzende Teil (6) aus dem gleichen durchscheinenden Kunststoff oder einem anderen, nicht durchscheinenden Kunststoff gefertigt ist;
• die Öffnung das Schutzblech (1) schneidet und das Gehäuse (2) in das Schutzblech (1) in einer Weise integriert ist, dass die konvexe Wand (5) in der Öffnung befindlich ist und über die Oberfläche des Schutzblechs an der Außenseite des Schutzblechs (1) herausragt, sodass das Gehäuse im Wesentlichen an der Innenseite des Schutzblechs (1) befindlich ist, die zum Hinterrad (10) des Fahrrads zeigt, während die konvexe Wand (5) aus der Oberfläche des Schutzblechs (1) an der Außenseite des Schutzblechs (1) herausragt.

2. Fahrrad nach Anspruch 1, **dadurch gekennzeichnet, dass**, in der Einbauposition des Schutzblechs gesehen, die Beleuchtungsoberfläche über eine Tangentialebene (R) an der Oberfläche des Schutzblechs herausragt, die einen Winkel (α) bezüglich einer vertikalen Ebene bildet, der mindestens 40° ist.

3. Fahrrad nach Anspruch 1 oder 2, **dadurch gekennzeichnet, dass** die Höhe, um die die Beleuchtungsoberfläche aus der Oberfläche des Schutzblechs herausragt, nicht mehr als 10 mm ist.

4. Fahrrad nach einem der vorhergehenden Ansprüche, **dadurch gekennzeichnet, dass** die herausragende Beleuchtungsoberfläche (8), in der Einbauposition des Schutzblechs (1) gesehen, auf beiden Seiten eine Zone umfasst, die in der Richtung des Randes zur Oberfläche des Schutzblechs verläuft, sodass Licht in beiden lateralen Richtungen über diese Zonen abgestrahlt werden kann.

5. Fahrrad nach einem der vorhergehenden Ansprüche, **dadurch gekennzeichnet, dass** die herausragende Beleuchtungsoberfläche (8), in der Einbauposition des Schutzblechs (1) gesehen, dazu ausgelegt ist, einen Strahl von Licht mit einem horizontalen Strahlwinkel von mindestens 180° zu emittieren.

6. Fahrrad nach einem der vorhergehenden Ansprüche, **dadurch gekennzeichnet, dass** die Beleuchtungsoberfläche, auf der Seite, die zum oberen Ende des Schutzblechs (1) gerichtet ist, und in der Einbauposition des Schutzblechs (1) gesehen, eine Zone (A) umfasst, wo die Beleuchtungsoberfläche (8) in der Richtung von ihrer oberen Kante (9) zur Oberfläche des Schutzblechs verläuft.

7. Fahrrad nach Anspruch 6, **dadurch gekennzeichnet, dass**, in der Einbauposition des Schutzblechs (1) gesehen, die Zone (A) dazu ausgelegt ist, Licht in eine Aufwärtsrichtung zu emittieren, die, in der vertikalen Symmetrieebene entsprechend der Längsrichtung des Schutzblechs (1), von der Zone (A) schräg nach oben verläuft und sich der quer verlaufenden Ebene annähert, die durch das obere Ende des Schutzblechs (1) verläuft.

8. Fahrrad nach Anspruch 6 oder 7, **dadurch gekennzeichnet, dass** das nach oben emittierte Licht eine Leuchtstärke von mindestens 0,025 cd aufweist.

9. Fahrrad nach einem der vorhergehenden Ansprüche, **dadurch gekennzeichnet, dass** die Beleuchtungsoberfläche (8) dazu ausgelegt ist, in der Einbauposition des Schutzblechs (1), einen Strahl von Licht mit einer Leuchtstärkeverteilung bezüglich einer vertikalen Bezugsebene und einer horizontalen Bezugsebene mit einer gemeinsamen Schnittlinie zu emittieren, die mit der Hauptachse des Strahls von Licht zusammenfällt, gemäß dem die Leuchtstärke des Lichts, das in die Richtungen emittiert wird, die einen horizontalen Winkel von 20° bezüglich der vertikalen Bezugsebene bilden und einen vertikalen Winkel von 5° bezüglich der horizontalen Bezugsebene bilden, mindestens 10 % der Leuchtstärke des Lichts beträgt, das entlang der Hauptachse emittiert wird.

10. Fahrrad nach einem der vorhergehenden Ansprüche, **dadurch gekennzeichnet, dass** die Beleuchtungsoberfläche (8) dazu ausgelegt ist, in der Einbauposition des Schutzblechs (1), einen Strahl von Licht mit einer Leuchtstärkeverteilung bezüglich einer vertikalen Bezugsebene und einer horizontalen Bezugsebene mit einer gemeinsamen Schnittlinie zu emittieren, die mit der Hauptachse des Strahls von Licht zusammenfällt, gemäß dem die Leuchtstärke des Lichts, das in die Richtungen emittiert wird, die einen horizontalen Winkel von 5° bezüglich der vertikalen Bezugsebene bilden und einen vertikalen Winkel von 10° bezüglich der horizontalen Bezugsebene bilden, mindestens 20 % der Leuchtstärke des Lichts beträgt, das entlang der Hauptachse emittiert wird.

11. Fahrrad nach einem der vorhergehenden Ansprüche, **dadurch gekennzeichnet, dass** die Lichtquelle (3) zumindest eine LED umfasst.

12. Fahrrad nach einem der vorhergehenden Ansprüche, **dadurch gekennzeichnet, dass** die Ausrichtung der Lichtquelle (3) einstellbar ist.

13. Fahrrad nach einem der vorhergehenden Ansprüche, **dadurch gekennzeichnet, dass** das Gehäuse (2) Mittel zum Modifizieren der Richtung des Lichts, das durch die Lichtquelle (3) emittiert wird, und/oder zum Zerstreuen des Lichts umfasst.

14. Fahrrad nach einem der vorhergehenden Ansprüche, **dadurch gekennzeichnet, dass** das Schutzblech (1) eine Sandwichstruktur aufweist, wobei zwei elektrisch leitfähige Schichten (1a), (1b) voneinander durch eine elektrisch isolierende Zwischenschicht (1c) getrennt werden, wobei das Gehäuse (2) mit dem Schutzblech (1) mittels eines elektrisch leitfähigen Verbindungsmittels (13), (14) verbunden ist, das das Schutzblech (1) schneidet, und dadurch, dass das Verbindungsmittel (13), (14) in diesem Fall eine elektrische Verbindung zwischen einer elektrisch leitfähigen Schicht (1a), (1b) des Schutzblechs (1) und einen Kontaktpunkt für Leistungsversorgung für eine oder mehrere elektrische oder elektronische Komponenten der Rücklichtvorrichtung bildet.

## Revendications

1. Bicyclette comprenant un garde-boue de bicyclette (1) muni d'un dispositif d'éclairage arrière, le dispositif d'éclairage arrière comprenant un boîtier (2) qui est incorporé dans le garde-boue, ledit boîtier (2) comprenant une coque supérieure (4) et une coque inférieure (7) qui sont assemblées par leurs bords contigus pour former une unité qui enferme un espace interne dans lequel au moins une source lumineuse (3) est prévue, le boîtier (2) étant prévu dans une ouverture transversale du garde-boue (1) et la coque supérieure (4) comprenant une paroi translucide (5), qui est une paroi convexe (5) qui, en utilisation, forme une surface d'éclairage (8), et une partie contiguë (6), et la forme et les dimensions du bord périphérique (5a) de la paroi translucide (5) correspondant à la forme et aux dimensions de l'ouverture dans le garde-boue (1), de sorte que le bord périphérique (5a) de la paroi translucide (5) est étroitement contigu aux bords de l'ouverture, la paroi translucide (5) formant une surface d'éclairage (8) faisant saillie à partir de la surface du garde-boue, en ce que ladite surface d'éclairage (8) suit sensiblement la courbure du garde-boue (1), et en ce que, vue dans la position de montage du garde-boue, la surface d'éclairage fait saillie au-dessus d'un plan tangent (R) à la surface du garde-boue qui fait un angle (α) par rapport à un plan vertical qui est au moins de 20° et au plus de 60°, et
- la paroi translucide (5) étant constituée d'une matière plastique translucide, et la partie contiguë (6) étant constituée de la même matière plastique translucide ou d'une autre matière plastique non translucide ;
- l'ouverture traversant le garde-boue (1), et le boîtier (2) étant incorporé dans le garde-boue (1) de telle manière que la paroi convexe (5) est située dans l'ouverture et fait saillie au-dessus de la surface du garde-boue sur le côté extérieur du garde-boue (1), de telle sorte que le boîtier est essentiellement situé sur le côté intérieur du garde-boue (1) qui fait face à la roue arrière (10) de la bicyclette, tandis que la paroi convexe (5) fait saillie à partir de la surface du garde-boue (1) sur le côté extérieur du garde-boue (1).

2. Bicyclette selon la revendication 1, **caractérisée en ce que**, vue dans la position de montage du garde-boue, la surface d'éclairage fait saillie au-dessus d'un plan tangent (R) à la surface du garde-boue qui fait un angle (α) par rapport à un plan vertical qui est d'au moins 40°.

3. Bicyclette selon la revendication 1 ou 2, **caractérisée en ce que** la hauteur dont la surface d'éclairage fait saillie par rapport à la surface du garde-boue n'est pas supérieure à 10 mm.

4. Bicyclette selon l'une des revendications précédentes, **caractérisée en ce que** la surface d'éclairage (8) en saillie, vue dans la position de montage du garde-boue (1), comprend de part et d'autre une zone qui s'étend dans la direction de la bordure vers la surface du garde-boue, de sorte que la lumière peut être rayonnée dans les deux directions latérales par l'intermédiaire de ces zones.

5. Bicyclette selon l'une quelconque des revendications précédentes, **caractérisée en ce que** la surface d'éclairage (8) en saillie, vue dans la position de montage du garde-boue (1), est configurée pour émettre un faisceau de lumière avec un angle de faisceau horizontal d'au moins 180°.

6. Bicyclette selon l'une quelconque des revendications précédentes, **caractérisée en ce que** la surface d'éclairage, sur le côté qui est dirigé vers l'extrémité supérieure du garde-boue (1) et vue dans la position de montage du garde-boue (1), comprend une zone (A) où la surface d'éclairage (8) s'étend dans la direction de son bord supérieur (9) vers la surface du garde-boue.

7. Bicyclette selon la revendication 6, **caractérisée en ce que**, vue dans la position de montage du garde-boue (1), ladite zone (A) est configurée pour émettre de la lumière dans une direction vers le haut qui, dans le plan vertical de symétrie selon la direction longitudinale du garde-boue (1), part de ladite zone (A) obliquement vers le haut et se rapproche du plan vertical transversal qui passe par l'extrémité supérieure du garde-boue (1).

8. Bicyclette selon la revendication 6 ou 7, **caractérisée en ce que** la lumière émise vers le haut a une luminosité d'au moins 0,025 cd.

9. Bicyclette selon l'une quelconque des revendications précédentes, **caractérisée en ce que** la surface d'éclairage (8) est configurée pour émettre, dans la position de montage du garde-boue (1), un faisceau de lumière ayant une distribution de luminosité par rapport à un plan de référence vertical et un plan de référence horizontal avec une ligne d'intersection mutuelle qui coïncide avec l'axe principal du faisceau de lumière, selon laquelle la luminosité de la lumière qui est émise dans les directions qui forment un angle horizontal de 20° par rapport au plan de référence vertical et forment un angle vertical de 5° par rapport au plan de référence horizontal, est au moins 10 % de la luminosité de la lumière qui est émise le long de l'axe principal.

10. Bicyclette selon l'une quelconque des revendications précédentes, **caractérisée en ce que** la surface d'éclairage (8) est configurée pour émettre, dans la position de montage du garde-boue (1), un faisceau de lumière ayant une distribution de luminosité par rapport à un plan de référence vertical et un plan de référence horizontal avec une ligne d'intersection mutuelle qui coïncide avec l'axe principal du faisceau de lumière, selon laquelle la luminosité de la lumière qui est émise dans les directions qui forment un angle horizontal de 5° par rapport au plan de référence vertical et forment un angle vertical de 10° par rapport au plan de référence horizontal, est au moins 20 % de la luminosité de la lumière qui est émise le long de l'axe principal.

11. Bicyclette selon l'une quelconque des revendications précédentes, **caractérisée en ce que** la source lumineuse (3) comprend au moins une LED.

12. Bicyclette selon l'une quelconque des revendications précédentes, **caractérisée en ce que** l'orientation de la source lumineuse (3) est réglable.

13. Bicyclette selon l'une quelconque des revendications précédentes, **caractérisée en ce que** le boîtier (2) comprend des moyens pour modifier la direction de la lumière émise par la source lumineuse (3) et/ou pour diffuser la lumière.

14. Bicyclette selon l'une quelconque des revendications précédentes, **caractérisée en ce que** le garde-boue (1) présente une structure sandwich, deux couches électriquement conductrices (1a), (1b) étant séparées l'une de l'autre par une couche intermédiaire électriquement isolante (1c), dans laquelle le boîtier (2) est relié au garde-boue (1) par un moyen de connexion électriquement conducteur (13), (14) qui traverse le garde-boue (1), et **en ce que** le moyen de connexion (13), (14) forme dans ce cas une connexion électrique entre une couche électriquement conductrice (1a), (1b) du garde-boue (1) et un point de contact pour l'alimentation électrique d'un ou plusieurs composants électriques ou électroniques du dispositif d'éclairage arrière.
